# EUROPÄISCHE PATENTSCHRIFT

(11) **EP 3 587 646 B1**
(45) Veröffentlichungstag und Bekanntmachung des Hinweises auf die Patenterteilung: **10.03.2021**
(21) Anmeldenummer: 18180468.3
(22) Anmeldetag: 28.06.2018
(51) Int. Cl.: D04H 3/04, B29C 70/00, D01G 25/00, B29C 70/20

(54) **EINRICHTUNG UND VERFAHREN ZUM AUFBRINGEN EINER BAND-, STREIFEN- ODER BAHNFÖRMIGEN UNIDIREKTIONALEN FASERLAGE MIT ZUMINDEST EINEM EINE VIELZAHL VON SPULEN TRAGENDEN SPULENGATTER**
DEVICE AND METHOD FOR APPLICATION OF A BAND, STRIP OR SHEET-LIKE UNIDIRECTIONAL FIBRE LAYER WITH AT LEAST ONE BOBBIN CREEL CARRYING A PLURALITY OF COILS
DISPOSITIF ET PROCÉDÉ D'APPLICATION D'UNE COUCHE FIBREUSE UNIDIRECTIONNELLE EN FORME DE BANDE, DE RUBAN OU DE FEUILLE CONTINUE À L'AIDE D'AU MOINS UN CANTRE SUPPORTANT UNE PLURALITÉ DE BOBINES

(43) Veröffentlichungstag der Anmeldung: 01.01.2020
(73) Patentinhaber: KARL MAYER Technische Textilien GmbH, 09117 Chemnitz (DE)
(72) Erfinder: Seuss, Rainer, 95197 Schauenstein (DE); Schmidt, Roland, 96346 Wallenfels (DE)
(74) Vertreter: Leske, Thomas

(56) Entgegenhaltungen:
- EP-A1- 2 151 517
- EP-B1- 2 003 232
- DE-A1-102009 042 384
- DE-B3- 10 312 534

## Beschreibung

Die Erfindung betrifft eine Einrichtung und ein Verfahren zum Aufbringen einer band-, streifen- oder bahnförmigen unidirektionalen Faserlage mit zumindest einem eine Vielzahl von Spulen aufweisenden Spulengatter.

Für die Herstellung von multiaxialen Fadengelegen werden unidirektionale Faserlagen erzeugt, welche übereinander in für jede Faserlage unterschiedlichen Winkeln der einzelnen Fasern zu einem Multiaxialgelege abgelegt werden. Die dafür bereitgestellten Fadenstränge müssen in der Regel gespreizt werden, und zwar vorzugsweise so stark wie möglich, dass ein möglichst niedriges Flächengewicht der einzelnen Faserlage erzeugt werden kann. Beim Verlegen von band-, streifen- oder bahnförmigen unidirektionalen Faserlagen werden in der Regel gespreizte Faserstränge auf einer sich in Förderrichtung des Geleges bewegenden Transporteinrichtung oder Unterstützung in dem entsprechenden Winkel zugeführt, abgelängt und dann abgelegt. Das Verlegen von Segmenten von gespreizten Fadensträngen zu unidirektionalen Faserlagen durch Ablegen von Segment neben Segment stellt einen diskontinuierlichen Vorgang hinsichtlich des Fadenverbrauches dar. Daher muss Vorsorge getroffen werden, wie nach Möglichkeit zum Einhalten einer konstanten Fadenspannung einerseits kontinuierlich von den Spulen abgezogen werden kann, andererseits der Verbrauch aber an die Legebewegung im Sinne eines diskontinuierlichen Vorgangs angepasst werden kann.

Hinzu kommt, dass der Spreizvorgang ein kontinuierlicher Vorgang sein muss, damit das Spreizen bei möglichst konstanter Fadenspannung stets zu einem gleichmäßigen Spreizergebnis führt, so dass die zu bänder- oder bahnförmigen Segmenten gespreizten Fadensegmente letztendlich zu einer gleichmäßigen unidirektionalen Faserlage führen.

In EP 2 003 232 B1 sind ein Verfahren und eine Einrichtung zum Aufbringen einer unidirektionalen Faserlage sowie ein Verfahren zum Herstellen eines Multiaxialgeleges bekannt. Dabei ist vorgesehen, dass das Spulengatter zusammen mit der Spreizeinrichtung und der eigentlichen Bandlegeeinrichtung eine gemeinsame bauliche Einheit bilden. Dadurch soll gewährleistet sein, dass die Fasern mit konstanter Geschwindigkeit von den Spulen des Spulengatters abgewickelt und durch das Spreizaggregat eben mit dieser möglichst konstanten Geschwindigkeit hindurchgeleitet werden können. Die erforderlichen Ausgleichsbewegungen, die durch die ungleichmäßigen Arbeitsbewegungen der Verlegeeinrichtung aufgrund des diskontinuierlichen Verbrauches von Fadenmaterial erforderlich werden, führt die bauliche Einheit als Ganzes durch, so dass sie sich nicht auf die Geschwindigkeit der die Spreizeinheit durchlaufenden Fasern auswirken können. Dazu müssen die Bewegungen der Verlegeeinrichtung zum Beispiel eines Greifers bei Verlegung in bandförmigen abgelängten Abschnitten und die Bewegung der gemeinsamen baulichen Einheit aufeinander abgestimmt werden. Bei entsprechender Abstimmung kann erreicht werden, dass die erforderliche Hin- und Herbewegung der gemeinsamen Einheit keine Auswirkungen auf den Spannungszustand der verbreiterten parallel gerichteten Fasern hat. Nur dann nämlich liegen die gleichmäßigen Spreizbedingungen vor, welche zu einer abgelegten unidirektionalen Lage von gleichmäßen und gleichbleibenden Eigenschaften führen. Nachteilig bei einer derartigen Anordnung in einer kompletten baulichen Einheit ist vor allen Dingen bei einer großen Anzahl von Spulen auch die große Masse, welche dann die Ausgleichsbewegungen mitausführen muss. Abgesehen von zusätzlichem Energiebedarf zum Bewegen großer Massen infolge einer großen Anzahl von Spulen spielt das Problem der Trägheit bei den großen Massen eine große Rolle, so dass man bald an Grenzen der Regelbarkeit im Sinne von Erzielung einer gleichmäßigen Durchlaufgeschwindigkeit durch die Spreizeinrichtung gelangt.

Auch in DE 10 2005 008 705 B3 ist eine Vorrichtung zum Zuführen von Faserbändern zu einer Wirkmaschine beschrieben, bei welcher Spulengatter, Ausbreitelement, Faserbandreserve und Heizeinrichtung fest zueinander angeordnet sind. Die Koordinierung und der Ausgleich des diskontinuierlichen Fadenverbrauchs erfolgt durch Stellantriebe und Lieferantriebe, um eine konstante Fadenspannung zu gewährleisten. Die Steuerung erfolgt dabei so, dass die Fadenreserve ungleiche oder diskontinuierliche Abnahmen bei einer unter Umständen gewährleistbaren kontinuierlichen Zuführung von Fadenmaterial ausgleichen soll. Jedenfalls ist das Spulengatter fest den anderen Teilen der Gesamteinrichtung zugeordnet. Bei einer großen Anzahl von Spulen würde man hier zu ähnlichen Problemen gelangen, wie bei dem zuvor beschriebenen Stand der Technik.

Die Aufgabe der vorliegenden Erfindung besteht im Lichte des vorstehend genannten Standes der Technik darin, eine Einrichtung zum Aufbringen einer band-, streifen- oder bahnförmigen unidirektionalen Faserlage bereitzustellen, mittels welcher nicht nur für eine stets kontinuierliche Durchlaufgeschwindigkeit des zu spreizenden Fadenstranges durch die Spreizeinrichtung gesorgt wird, sondern mittels welcher auch die Ausgleichsbewegung zum Ausgleich des diskontinuierlichen Verbrauchs des in Segmenten zu einer unidirektionalen Faserlage abzulegenden Fasermaterials unabhängig von der Anzahl der zu verwendenden bzw. einzusetzenden Spulen mit möglichst geringen zu bewegenden Massen realisiert werden kann.

Diese Aufgabe wird mit einer Einrichtung zum Aufbringen einer band-, streifen- oder bahnförmigen unidirektionalen Faserlage mit den Merkmalen gemäß Anspruch 1 und mit einem entsprechenden Verfahren mit den Merkmalen gemäß Anspruch 10 gelöst. Zweckmäßige Weiterbildungen sind in den jeweiligen abhängigen Ansprüchen definiert.

Gemäß der Erfindung weist die Einrichtung zum Aufbringen einer band-, streifen- oder bahnförmigen unidirektionalen Faserlage eine Transporteinrichtung, welche sich in Förderrichtung der entstehenden Faserlage dazu bewegt, und zumindest ein Spulengatter mit einer Vielzahl von Spulen auf, auf welchen jeweilige Fäden aufgewickelt sind, welche von den Spulen abwickelbar und zu einem Fadenstrang zusammenfassbar sind. Unter Fäden sollen im Rahmen dieser Erfindung Tows, Rovings, Kabel oder gegebenenfalls auch Einzelfäden verstanden werden. Die Fäden werden zu einem Fadenstrang zusammengefasst, welcher zur Erzielung definierter, möglichst niedriger Flächengewichte für Multiaxialanwendungen gespreizt wird. Es ist zumindest eine Verlegeeinrichtung angeordnet, welche eine Spreizeinrichtung für den Fadenstrang trägt. Vorzugsweise können auch zwei oder mehrere Spreizeinrichtungen für den Fadenstrang auf der Verlegeeinrichtung angeordnet sein. Die Einrichtung ist so ausgebildet, dass ihre Verlegeeinrichtung gemeinsam mit der Spreizeinrichtung einen Ausgleichshub durchführt, bei welchem der diskontinuierliche Verbrauch des Fadenstranges durch segmentweises Ablegen eben durch den Ausgleichshub ausgeglichen wird. Durch diesen Ausgleichshub wird trotz des diskontinuierlichen Verbrauches gewährleistet, dass das Spreizen des Fadenstranges kontinuierlich durchgeführt wird. Das bedeutet, dass auch bei dem Ausgleichshub der Verlegeeinrichtung die Spreizeinrichtung aktiv ist.

Die Transporteinrichtung ist in der Regel als eine Ablageeinrichtung ausgebildet, welche an jeder Seite eine Transportkette aufweist. An den Transportketten sind entsprechende Nadeln und/oder Klemmen vorgesehen, mittels welcher die abgelängten und abgelegten Fadensegmente gehalten und durch die Bewegung der Transportketten in Förderrichtung bewegt werden. Die abgelängten Segmente werden in Winkeln zu der Förderrichtung der entstehenden Faserlage auf der Transporteinrichtung wie beispielsweise in Winkeln von 90°, 45° oder 30° abgelegt, wobei einzelne Faserlagen oder mehrere solcher Faserlagen mit unterschiedlichen Fadenorientierungsrichtungen übereinander abgelegt und an den Halte- bzw. Klemmeinrichtungen an den Transportketten entsprechend gehalten werden. Sofern bei einem Multiaxialgelege beispielsweise die erste von einer Fadenorientierung eine von 0° abweichende Ablegerichtung aufweist, kann für danach abzulegende 0°-Lagen die erste Lage des Multiaxialgeleges als Unterlage dienen, welche dann Teil der Transporteinrichtung ist und mit deren Fördergeschwindigkeit die hergestellte Lage bzw. das hergestellte Multiaxialgelege vom unmittelbaren Ort des Ablegens wegtransportiert. Diese unterste Lage eines Multiaxialgeleges kann eben dann als Unterlage genutzt werden für eine Fadenlage mit 0°-Fadenorientierung. Es ist aber natürlich auch möglich, dass Multiaxialgelege hergestellt werden, bei denen die erste abzulegende unidirektionale Faserlage eine 0°-Lage ist. In einem solchen Fall ist zwischen den Transportketten, welche zwischen sich den Bereich für das Ablegen der unidirektionalen Faserlagen bilden, eine zusätzliche Unterlage vorgesehen. Auf einer derartigen Unterlage können dann auch 0°-Lagen als erste Lagen eines Multiaxialgeleges abgelegt werden. Prinzipiell kann natürlich auch für jegliche Ablegewinkel von einzelnen Faserlagen eines Multiaxialgeleges eine Unterlage für ein Transporteinrichtungssystem genutzt werden. Gleichwohl erforderlich ist es nur, wenn beispielsweise 0°-Lagen als erste Lagen zu verlegen sind.

Indem die Verlegeeinrichtung zusammen mit der Spreizeinrichtung einen Ausgleichshub zu dem diskontinuierlichen Verbrauch des Fadenstranges durchführt, und zwar bei aktiv bleibender Spreizeinrichtung, ist es möglich und wird es bei der erfindungsgemäßen Einrichtung realisiert, dass das Spulengatter von der Verlegeeinrichtung separat angeordnet und baulich entkoppelt werden kann. Diese separate Anordnung und bauliche Entkopplung des Spulengatters von der Verlegeeinrichtung hat den Vorteil, dass die Spuleneinrichtung beispielsweise auf einem separaten Gestell neben der eigentlichen, die Verlegung der gespreizten Fadenstränge vornehmenden Einrichtung angeordnet werden kann, so dass bei der technologisch bedingten Bewegungen der Verlegeeinrichtung keine zusätzlichen größeren Massen wegen beispielsweise einer Vielzahl gewünschter Spulen mitbewegt werden müssen. Dadurch kann die gesamte Anlage wesentlich kostengünstiger hergestellt werden, weil das auch eine größere Anzahl von Spulen umfassende Spulengatter nicht mitbewegt werden muss. Insbesondere bei einer großen Anzahl von Spulen könnte ansonsten die mitzubewegende Masse eine Größe annehmen, welche nur noch mit extrem großem energetischem Aufwand mitbewegt werden könnte.

Vorzugsweise ist die Spreizeinrichtung in der Art eines Schlittens auf der Verlegeeinrichtung angeordnet, so dass mittels einer entsprechenden Bewegung der in Form eines Schlittens ausgebildeten Spreizeinrichtung relativ zur Bewegung der Verlegeeinrichtung eben der entsprechende dem diskontinuierlichen Verbrauch des Fadenstranges entsprechende Ausgleichshub ausführbar ist.

Vorzugsweise ist die Spreizeinrichtung zweiteilig ausgebildet und weist zwei Spreizebenen auf. Um die Spreizeinrichtung möglichst kompakt auszubilden, ist es weiter vorteilhaft, die beiden Spreizebenen in der Spreizeinrichtung übereinander anzuordnen. Dadurch sind also eine obere Spreizebene und eine untere Spreizebene vorhanden. Die in den jeweiligen Ebenen, das heißt in der oberen Ebene wie auch in der unteren Ebene, gespreizten bzw. zu spreizenden Fadenstränge werden dabei in einem solchen Abstand zueinander der jeweiligen Ebene der Spreizeinrichtung zugeführt, dass nach dem Spreizen im Wesentlichen ein Abstand zwischen den einzelnen Fadensträngen vorhanden ist, welcher etwa der Breite des Fadenstranges entspricht, auf welche dieser am Ende des Spreizvorganges gespreizt worden ist. Die einzelnen Fadenstränge sind nun so angeordnet, dass die Fadenstränge, welche in der oberen Ebene gespreizt worden sind, der Faserlage von oben zugeführt wird, während die Fadenstränge, welche in der unteren Spreizeinrichtung gespreizt worden sind, so der Faserlage zugeführt werden, dass sie in die in der oberen Spreizebene vorhandenen Abstände zwischen den gespreizten Fadensträngen hineingefördert werden, so dass nach der Zusammenführung von unten und von oben eine im Wesentlichen geschlossene Faserlage entsteht. Dabei ist eine gewisse Überlappung der einzelnen Fadenstränge an deren Endbereichen sogar erwünscht, da beim Spreizen der theoretische Fall nicht auftritt, gemäß welchem die einzelnen Fasern des Fadenstranges Faser an Faser nebeneinander angeordnet sind, so dass nach dem Spreizen eine Lage gleichmäßiger Dicke entsteht, wenn ohne jegliche Überlappung gearbeitet wird und wenn die Breite des gespreizten Faserstranges genau der Breite entspricht, welche nach dem Spreizen der ersten Spreizebene zwischen den einzelnen Fadensträngen belassen worden ist und durch das Zuführen der gespreizten Fadenstränge von der anderen Spreizeinrichtung, in diesem Fall der unteren Spreizeinrichtung, der Faserlage zugeführt worden ist. Das bedeutet, dass die Faserlage aus einzelnen Strängen, welche in unterschiedlichen Ebenen gespreizt werden, zusammengeführt wird und durch die gewisse Überlappung an den Endbereichen der Fadenstränge eine trotz Abweichens der einzelnen Fadenstränge von einer idealerweise gewünschten rechteckigen Querschnittsform eine möglichst homogene Fläche bilden.

Die Spreizeinrichtung insgesamt, wie auch die die vorzugsweise zwei Ebenen der Spreizeinrichtung definierenden Teilspreizeinrichtungen, weisen eine Vielzahl von stationär und hintereinander versetzt angeordneten Walzen oder Stäben auf, welche vorzugsweise als Umlenkwalzen oder als zum Vibrationsspreizen seitlich angetriebene Ovalstäbe ausgebildet sind. Die zu spreizenden Fadenstränge werden in abwechselnder Reihenfolge an der Unterseite und anschließend über die Oberseite der hintereinander angeordneten Walzen oder Stäbe geführt. Ein Vorteil des Spreizens der einzelnen Fadenstränge separat besteht u. a. darin, dass ohne Behinderung durch seitlich danebenliegende andere Fadenstränge der jeweilige zu spreizende Fadenstrang allein möglichst optimal gespreizt werden kann.

Die erfindungsgemäße Einrichtung ist vorzugsweise so ausgebildet, dass deren Spreizeinrichtung zwischen einer von der unidirektionalen Faserlage am weitesten entfernten Grundstellung und einer Stellung nach erfolgtem kompletten Ausgleichshub bewegbar ist. Die Strecke zwischen der Grundstellung und der Stellung nach dem Ausgleichshub entspricht dabei der Breite der unidirektionalen Faserlage, welche nach dem Spreizen der Fadenstränge und deren Zusammenführen erzeugt wird.

Aufgrund der gewissen Unregelmäßigkeiten in der Dicke der gespreizten Fadenstränge insbesondere an deren seitlichen Endbereichen ist die Überlappung an den Endbereichen der einzelnen Fadenstränge mit den jeweiligen benachbarten Fadensträngen sogar erwünscht, und führt insbesondere nach einem vorzugsweise durchgeführten weiteren Spreizvorgang zu einer insgesamt erhöhten Vergleichmäßigung der Faserverteilung in der Ebene der nach dem Spreizen erzielten Faserlage. Durch die Überlappung ergibt sich noch ein weiterer Vorteil dahingehend, dass sich die Filamente insbesondere im Randbereich der jeweiligen Fadenstränge verhaken und die gespreizten Fadenstränge so besser zusammenhalten. Das zusätzliche Spreizen wird vor dem Ablegen eines zuvor gespreizten und bereits abgelängten Fadenstranges des noch nicht abgelängten Segmentes der Faserlage aufgeprägt, wobei dazu die erfindungsgemäße Einrichtung eine weitere Spreizeinrichtung hinter der Spreizeinrichtung aufweist, oder die der Gleichmäßigkeit der Fadenverteilung in dem gespreizten Fadenstrang wird durch zumindest nochmaliges oder auch mehrmaliges Durchlaufen der Faserlage durch die Spreizeinrichtung erzeugt.

Vorzugsweise sind mehrere Spulengatter und mehrere Verlegeeinrichtungen vorgesehen, welche jeweils mit einer Spreizeinrichtung versehen sind, mittels welcher gespreizte band-, streifen- oder bahnförmige Faserlagen unter definierten jeweiligen Winkeln auf der Transporteinrichtung ablegbar sind. Und zwar ist bei diesem Ausführungsbeispiel jeder Verlegeeinrichtung, auf welcher eine jeweilige Spreizeinrichtung angeordnet ist, ein von der Verlegeeinrichtung baulich getrenntes Spulengatter zugeordnet.

Vorzugsweise sind die Verlegeeinrichtungen zusammen mit ihren darauf angeordneten Spreizeinrichtungen jeweils unter unterschiedlichen Winkeln zu der Transporteinrichtung angeordnet, so dass mittels der Verlegeeinrichtungen die gespreizte Faserlage entsprechend abgelegt wird.

Aufgrund der Entkopplung zwischen Spulengatter und Verlegeeinrichtung dergestalt, dass das Spulengatter bei der Ausgleichsbewegung der Verlegeeinrichtung bezüglich der Spreizeinrichtung nicht mitbewegt werden muss, kann eine hohe Anzahl von Spulen verwendet werden, ohne dass deren relativ große Massen mitzubewegen wäre.

Gemäß einem zweiten Aspekt der Erfindung wird ein Verfahren zum Aufbringen einer band-, streifen- oder bahnförmigen unidirektionalen Faserlage auf eine sich in Förderrichtung bewegende Transporteinrichtung für ein Multiaxialgelege bereitgestellt, welches die folgenden Schritte aufweist:
Es werden jeweilige Fäden von einer Vielzahl von stationär angeordneten Spulen eines Spulengatters abgewickelt und zu einem Fadenstrang, welcher vorzugsweise aus Carbonfasern oder Glasfasern besteht, zusammengefasst. Der Fadenstrang wird in zumindest einer Spreizeinrichtung zunächst gespreizt, und danach wird der gespreizte Fadenstrang diskontinuierlich, vorzugsweise in Form von Segmenten und vorzugsweise unter definierten Winkeln zur Förderrichtung der Transporteinrichtung abgelegt; die Spreizeinrichtung, welche auf einer Verlegeeinrichtung angeordnet ist, führt relativ zur Bewegung der Verlegeeinrichtung eine Ausgleichsbewegung zu dem diskontinuierlichen Verbrauch des Fadenstranges durch segmentweises Ablegen auf der Unterstützung bei seinem diskontinuierlichen Verlegen aus; und
die Ausgleichsbewegung der Spreizeinrichtung wird relativ zur Verlegeeinrichtung derart ausgeführt, dass der Fadenstrang auch während des Verlegens in seiner Fadenspannung in einem definierten Wertebereich gehalten wird und insbesondere die Spreizeinrichtung aktiv und kontinuierlich weiterarbeitet.

Vorzugsweise gleitet die Spreizeinrichtung auf der Verlegeeinrichtung beim Ausführen ihrer Ausgleichsbewegung schlittenartig. Das bedeutet, dass die Spreizeinrichtung vorzugsweise in der Art einer Linearführung relativ zur Bewegung der Verlegeeinrichtung auf dieser bewegt wird.

Vorzugsweise durchläuft der zu spreizende Fadenstrang ein System hintereinander versetzt angeordneter Umlenkwalzen dergestalt, dass der zu spreizende Fadenstrang abwechselnd über und nachfolgend unter Spreizwalzen oder Spreizstäbe bzw. Umlenkwalzen geführt wird. Dabei wird die Fadenspannung aufrechterhalten, was gerade auch durch den Ausgleichshub, welchen die Verlegeeinrichung bezüglich der Spreizeinrichtung bzw. die Spreizeinrichtung relativ zur Verlegeeinrichtung durchführt, gewährleistet wird. Bei Aufrechterhaltung der Fadenspannung reicht die Reibungskraft, welche durch den definierten Umschlingungswinkel des zu spreizenden Fadenstranges um die Umlenkwalze bzw. den Spreizstab auf den zu spreizenden Fadenstrang ausgeübt wird, aus, den Fadenstrang gleichmäßig zu spreizen, wenn außerdem den Spreizwalzen, Spreizstäben oder Umlenkwalzen zusätzlich eine Vibration aufgeprägt wird.

Für den Fall, dass mehrere Spulengatter vorhanden sind und jedes Spulengatter dieser Mehrzahl von Spulengattern jeweils eine Verlegeeinrichtung einer der Anzahl der Spulengatter entsprechenden Anzahl von Verlegeeinrichtungen mit den jeweiligen Fäden beliefert, kann die Flexibilität einer Gesamteinrichtung erhöht werden und können auch gleichzeitig pro Zeiteinheit mehr Segmente gespreizter Fadenlagen in definierten Winkeln auf die Transporteinrichtung abgelegt werden.

Vorzugsweise werden während des Ablegens oder nach dem Ablegen der sich in der Faserlage überlappenden gespreizten und die Faserlage als im Wesentlich geschlossene Fläche bildenden Fadenstränge einem zusätzlichen Spreizprozess unterzogen. Dieser zusätzliche Spreizprozess wird vorzugsweise durch eine der Spreizeinrichtung nachgelagerte weitere Spreizeinrichtung erreicht. Es kann aber auch durch ein zweimaliges oder mehrmaliges Durchlaufen der Faserlage durch die Spreizeinrichtung realisiert werden.

In dem Fall, in welchem zwei Spreizebenen in der Spreizeinrichtung vorgesehen sind, ist es vorzugsweise vorgesehen, dass das Spreizen der Fadenstränge in nur einer Ebene durchgeführt wird, zu welcher ein Teil der Fadenstränge von oben und der andere Teil der Fadenstränge von unten durch entsprechende Umlenkung derselben in die Ebene der Faserlage zugeführt werden. Wenn die obere Zuführung und die untere Zuführung zusammengeführt werden und nur eine Spreizebene der zumindest zwei Spreizebenen aufweisenden Spreizeinrichtung genutzt wird, so kann jeweils mit einer Ebene gearbeitet werden, und die für das Spreizen gerade nicht genutzte Spreizebene kann stillgesetzt werden, so dass im Einzugsbereich der stillgesetzten Ebene die Spulenbestückung erfolgen kann, d. h. dass gegebenenfalls neue Spulen aufgefüllt oder Spulen ausgewechselt werden können, während in der anderen Spreizebene das normale Spreizen weiter realisiert werden kann.

Weitere Vorteile, Details und Anwendungsmöglichkeiten der vorliegenden Erfindung werden nun anhand der Figuren detailliert näher erläutert. In der Zeichnung zeigen:
- Figur 1: zeigt eine Seitenansicht einer erfindungsgemäßen Verlegeeinrichtung mit darauf angeordneter Spreizeinrichtung und davon entkoppelt angeordnetem Spulengatter;
- Figur 2: eine Draufsicht der Einrichtung gemäß Figur 1;
- Figur 3: eine prinzipielle Darstellung einer zwischen Transportketten geführten Faserlage, welche von einer Einrichtung zum Spreizen eines Fadenstranges nach dessen Ablängung als Fadensegment in einer gewünschten Richtung des Multiaxialgeleges zugeführt wird, und zwar in Draufsicht bei Bewegung der Verlegeeinrichtung im Sinne eines Ausgleichshubs entgegen der Segmentabzugsrichtung;
- Figur 4: eine Darstellung gemäß Figur 3 bei vollständig ausgeführtem Ausgleichshub mit in seiner Endposition angeordneter erfindungsgemäßen Einrichtung, wobei der gespreizte Fadenstrang von einer an einem Portal bewegbaren Klemme gerade ergriffen ist;
- Figur 5: zeigt den Vorgang des Abziehens des gespreizten Fadenstranges durch die Diagonalbewegung des Greifers am Portal über den zwischen den Transportketten aufgespannten Bereich der Transporteinrichtung;
- Figur 6: zeigt den Prozess des Ablegens des gespreizten Fadenstranges bei erfolgter Bewegung des Legers des Portals über die Breite der Transporteinrichtung zwischen den Transportketten;
- Figur 7: zeigt den Vorgang des Übernehmens des abzulegenden Fadensegmentes durch ein weiteres Portal mit entsprechenden Legern zum Halten des gespreizten Fadenstrangsegmentes nach dessen Ablängung (siehe Figur 8) und dessen Transport zum zuvor abgelegten Ende der Faserlage;
- Figur 8: zeigt den Vorgang gemäß Figur 7 bei jedoch abgelängtem Fadensegment;
- Figur 9: zeigt den Vorgang des Zurückfahrens der Verlegeeinrichtung und des Beendens der Ablegung des Fadensegmentes in der auf der Transporteinrichtung getragenen Faserlage;
- Figur 10: zeigt das durch den Greifer des vorderen Portals gerade ergriffene Ende des als nächstes zum Ablegen vorgesehenen Fadensegmentes;
- Figur 11: zeigt eine Verlegeeinrichtung mit in dieser integrierter kontinuierlich arbeitender Spreizeinrichtung und zwei dieser Verlegeeinrichtung zugeordneten, jedoch von dieser entkoppelten Spulengatter;
- Figur 12: zeigt eine Ansicht der erfindungsgemäßen Einrichtung gemäß Figur 1 mit am weitesten zurückgezogener Position der Verlegeeinrichtung;
- Figur 13: eine Seitenansicht der erfindungsgemäßen Vorrichtung gemäß Figur 12 mit am weitesten nach vorn gefahrener Verlegeeinrichtung mit darauf angeordneter Spreizeinrichtung, bei welcher Einrichtung der Halter zur Kompensation bzw. Aufrechterhaltung der entsprechenden Fadenspannung in Richtung auf das von der Verlegeeinrichtung entkoppelte Spulengatter bewegt ist; und
- Figur 14: zeigt eine Einrichtung gemäß der Erfindung, bei welcher der Einfachheit halber nur die Verlegeeinrichtung und Spreizeinrichtung dargestellt sind, bei welcher nur eine der vorhandenen mindestens zwei Spreizebenen zum Spreizen des zugeführten Fadenstranges genutzt wird.

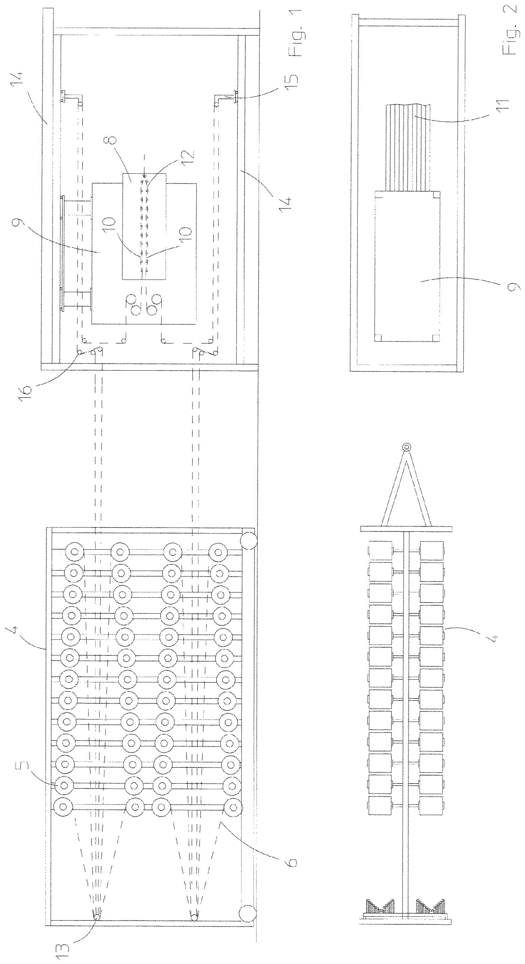

In Figur 1 ist eine Seitenansicht der erfindungsgemäßen Einrichtung gezeigt, bei welcher die Verlegeeinrichtung eine darauf sozusagen als Schlitten im Sinne einer Huckepack-Anordnung angeordnete Spreizeinrichtung 8 aufweist, welche relativ zu der Verlegeeinrichtung 9 bewegbar ist. Apparativ abgekoppelt ist ein Spulengatter 4 mit einer Vielzahl von Spulen 5, von welchen einzelne Fäden 6 von einzelnen Spulen abgezogen und zu einem jeweiligen Fadenstrang 7 zusammengefasst werden. Zur Vergleichmäßigung der einzelnen zum Fadenstrang zusammengefassten Fäden werden diese von den jeweiligen Spulen 5 einer Tow- bzw. Kabelumlenkrolle im Spulengatter 4 zugeführt, dort umgelenkt und letztlich aus dem Spulengatter 4 heraus der eigentlichen Verlegeeinrichtung 9 zugeführt.

Bei der Darstellung gemäß Figur 1 ist eine Seitenansicht gewählt, aus welcher ersichtlich ist, dass ein Fadenstrang 7 im oberen Bereich der Verlegeeinrichtung 9 und ein zweiter Fadenstrang 7 im unteren Bereich der Verlegeeinrichtung 9 angeordnet sind. Die innerhalb der Verlegeeinrichtung 9 relativ zu dieser beweglich angeordnete Spreizeinrichtung 8 weist zwei hintereinander angeordnete Reihen von Umlenkwalzen 12 bzw. Umlenkstäben auf, über welche die zu spreizenden Fadenlagen 7 abwechselnd an deren Oberseite und deren Unterseite geführt werden. Es sind sozusagen in der Spreizeinrichtung 8 zwei Spreizebenen 10, d. h. es ist eine zweiteilige Spreizeinrichtung vorhanden. Über mehrere Umlenkungen wird die obere Fadenlage der oberen Reihe von Umlenkstäben bzw. Umlenkwalzen zugeführt, während in analoger Weise die untere Fadenlage der unteren Reihe von Umlenkstäben zugeführt wird. Die Zweiteiligkeit der Spreizeinrichtung 8 hat den Vorteil, dass den zu spreizenden Fadensträngen 7 genügend Platz zu deren Ausbreitung belassen wird. Bei idealer Betrachtung hätte der Fadenstrang nach seiner Spreizung einen rechteckigen Querschnitt, so dass dieser optimal innerhalb der Faserlage 1 aneinandergereiht werden kann. In der Praxis ergibt sich jedoch beim Spreizen für den Fadenstrang ein länglicher ovaler Querschnitt. Um dennoch eine möglichst homogene Fläche zu erreichen, wird bewusst zwischen den einzelnen Fadensträngen an deren Enden eine gewisse Überlappung gewährleistet, zumal die Enden in ihrer Dicke dünner sind als im mittleren Bereich, wie das bei einer langgestreckten ovalen Form eben der Fall ist. Aus Figur 1 ist ersichtlich, dass die in zwei Ebenen stattfindende Spreizung der Fadenlage nach deren Zusammenführung zu einer im Wesentlichen geschlossen ausgebildeten Faserlage führt. Je nach Spreizung kann das gewünschte Flächengewicht erzeugt werden. Soll am Ende der Spreizung nach der Zusammenführung der einzelnen Fadenstränge zu einer im Wesentlichen geschlossenen Faserlage eine Vergleichmäßigung erfolgen, so kann der Spreizeinrichtung 8 noch eine weitere, hier nicht dargestellte Spreizeinrichtung folgen, mittels welcher die Fadenstränge vor allen Dingen in den Übergangszonen, d. h. Überlappungsbereichen, vergleichmäßigt werden.

Je nach Art der Zusammenführung beispielsweise auf Lücke, wie zuvor beschrieben, ist es auch möglich, die einzelnen gespreizten Fadenstränge 7 übereinander abzulegen, um ein gegebenenfalls gewünschtes höheres Flächengewicht zu erzeugen.

Die Relativbewegung der an der Verlegeeinrichtung 9 angeordneten Spreizeinrichtung 8 sichert in Verbindung mit innerhalb eines Rahmens 14 der Verlegeeinrichtung 9 angeordneten Haltern mit entsprechender Fadenstrangumlenkrolle 16, dass die Fadenspannung trotz diskontinuierlicher Entnahme von gespreizten Fadensegmenten 11 zum Zwecke des Ablegens auf einer hier in Figur 1 nicht dargestellten Transporteinrichtung erhalten bleibt und die Spreizeinrichtung 8 damit kontinuierlich betrieben werden kann. Das kontinuierliche Betreiben der Spreizeinrichtung bei konstant aufrechterhaltener Faser- bzw. Fadenstrangspannung gewährleistet ein gleichmäßiges und qualitativ hochwertiges Spreizergebnis.

In Figur 2 ist eine Draufsicht der erfindungsgemäßen Einrichtung gemäß Figur 1 dargestellt, wobei aus Gründen der Vereinfachung die einzelnen Fäden 6 bzw. aus den Fäden erzeugten Fadenstränge 7 nicht eingezeichnet sind. Aus Figur 2 ist ersichtlich, dass, nachdem der Fadenstrang die die Spreizeinrichtung 8 beinhaltende Verlegeeinrichtung 9 verlässt, ein gespreizter Fadenstrang 11 vorliegt und sozusagen bereit ist, mittels geeigneter Greifer ergriffen und zu einer im Wesentlichen durchgängig ausgebildeten Faserlage zusammengefügt zu werden. Werden auf der in Förderrichtung sich bewegenden Transporteinrichtung 3 Faserlagen unterschiedlicher Richtung ihrer Fasern abgelegt, kann ein Multiaxialgelege erzeugt werden.

Wenn für die Spreizeinrichtung zwei Spreizebenen vorgesehen sind, so hat dies den weiteren Vorteil, dass Stillstandszeiten reduziert werden können, weil auch jeweils mit einer der beiden prinzipiell vorhandenen Ebenen zum Spreizen gearbeitet werden kann. Dabei wird zum Beispiel der obere Fadenstrang, d. h. in der oberen Ebene, dem Spreizprozess zugeführt, während der untere Fadenstrang, d. h. in der unter Ebene, zur Spulenbestückung stillgesetzt ist.

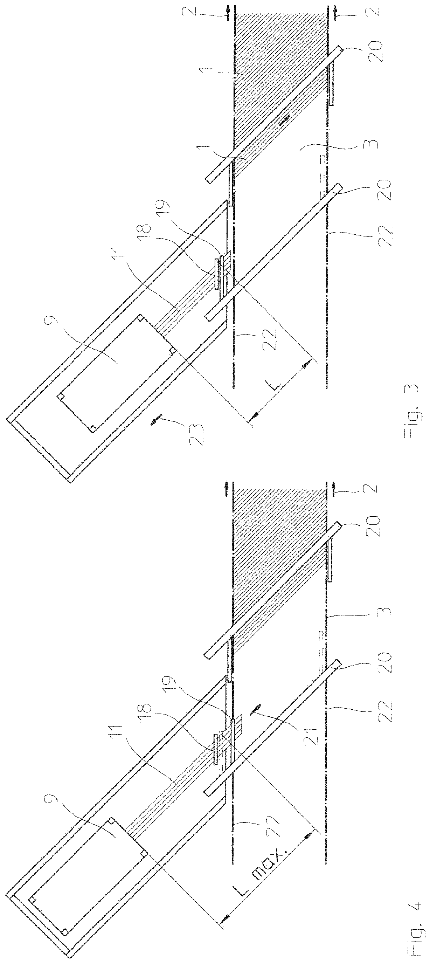

In den Figuren 3 bis 8 ist der Ablauf des Verlegens der gespreizten Fadenstränge auf der durch die Transportketten 22 gebildeten Transporteinrichtung 3 während der verschiedenen Phasen dargestellt. In Figur 3 bewegt sich die Verlegeeinrichtung 9 vom Bereich der Seite der Transporteinrichtung 3, an welcher von einem ersten Portal 20.1 bzw. ein Greifer 19 das vordere Ende des gespreizten Fadenstranges 11 von einer Halte- und Erfassungseinrichtung 18 ergreift. Dabei bewegt sich die Verlegeeinrichtung 9 zum hinteren Ende des Rahmens 14 der Verlegeeinrichtung 9, wodurch es ermöglicht wird, die dem jeweiligen Verlegewinkel des Fadensegmentes in der Faserlage 1 entsprechende Länge L für einen gespreizten Fadenstrang 11 zu erzeugen. Nachdem die Verlegeeinrichtung 9 einen Ausgleichshub zur Aufrechterhaltung der Spannung und der Kontinuität und gleichmäßigen Arbeit der auf der Verlegeeinrichtung 9 angeordneten Spreizeinrichtung 8 entgegen dem Segmentabzug bis auf die maximale Länge des Fadensegments Lₘₐₓ durchgeführt hat, erfolgt nun eine Ablegung des gespreizten Fadenstranges 11 durch Bewegen des Greifers 19 am ersten Portal 20.1 über die Länge dieses Portals und damit über die Breite der Transporteinrichtung 3.

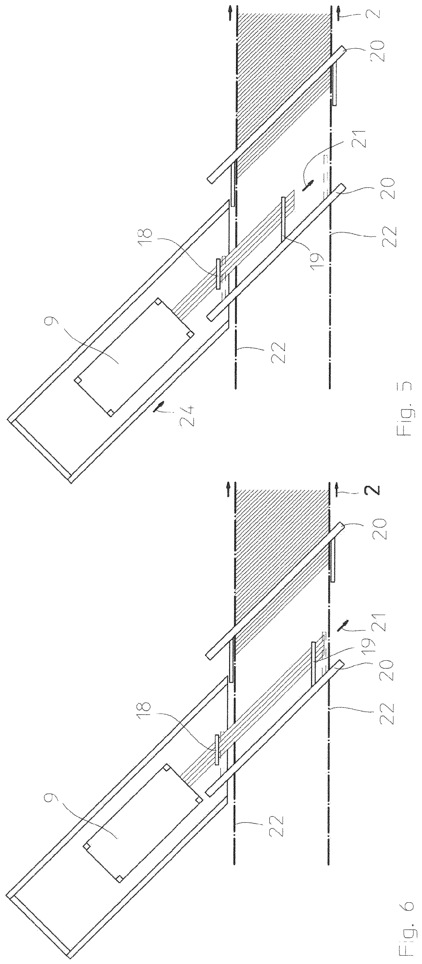

In Figur 5 ist dieser Vorgang insoweit dargestellt, als der Greifer 19 am ersten Portal 20.1 durch die geöffnet gehaltene Halte- und Erfassungseinrichtung 18 über die Mitte der Transporteinrichtung 3 gezogen bzw. geführt worden ist, was durch den Pfeil 21 dargestellt ist, und zwar unter gleichzeitiger Bewegung der Verlegeeinrichtung 9 von der hinteren Position (siehe Figur 4) wieder in Richtung auf die vordere Position in den Bereich der in Förderrichtung 2 dargestellten linken Transportkette 22. Die Verlegeeinrichtung 9 bewegt sich dabei in Richtung 24 des Ausgleichshubes in Segmentabzugsrichtung.

In Figur 6 ist der Vorgang gemäß Figur 5 nahezu abgeschlossen, indem der Greifer 19 am ersten Portal 20.1 die gesamte Breite der Unterstützung 3 im Wesentlichen überstrichen hat.

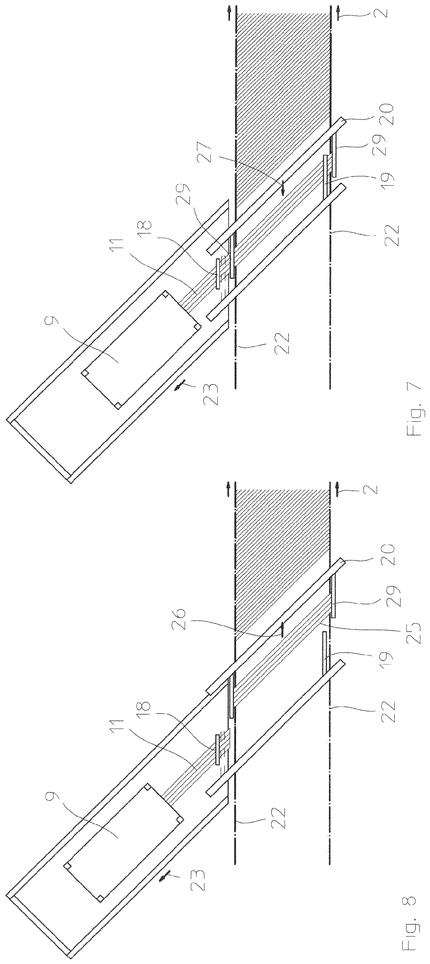

In Figur 7 ist das gespreizte Fadensegment weiter in dessen Ablegerichtung bis über die in Förderrichtung 2 gesehen rechte Transportkette 22 geführt und wird dort an seinem vorderen Ende mittels eines Legers 29 am zweiten Portal 20.2 übernommen. Gleichzeitig wird, wie es in Figur 8 dargestellt ist, das Segment von dem weiteren Leger 29 am zweiten Portal 20.2 auf der Seite der Verlegeeinrichtung 9 ergriffen und das gespreizte abgelängte Fadenstrangsegment 25 gebildet. Nachdem das zweite Portal 20.2 mit beiden Legern 29 das abgelängte Fadensegment ergriffen hat, wird es mit einer Bewegung 26 in Förderrichtung 2 bewegt, bis es an den Stoß der Faserlage 1 nach Möglichkeit gassenfrei und ohne Überlappung abgelegt worden ist, wohingegen das zweite Portal 20.2 zunächst zum Ergreifen des abgelängten Fadenstrangsegmentes 25 eine Bewegung 27 entgegen der Förderrichtung 2 ausführt.

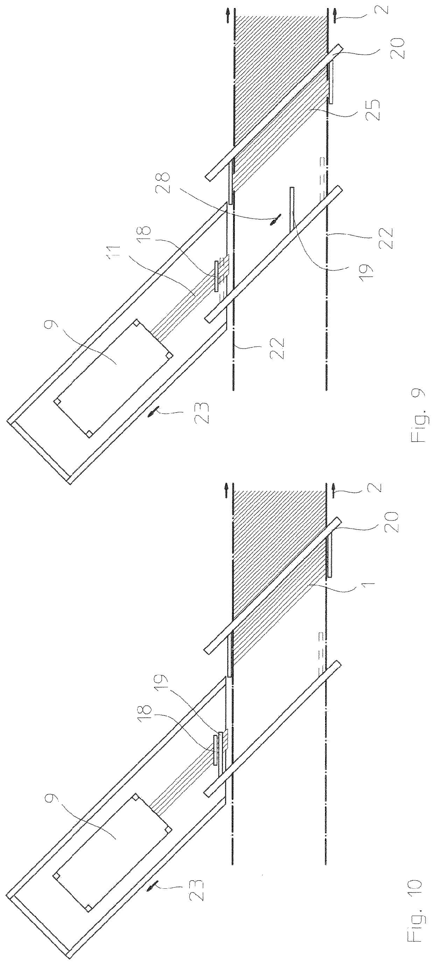

Zum Teil zeitparallel erfolgt eine Rückwärtsbewegung der Verlegeeinrichtung 9, was durch die Bezugsziffer 23 dargestellt ist, welche den Ausgleichshub entgegen der Segmentabzugsrichtung darstellt. Angedeutet in Figur 9 ist die linksseitige Position des Greifers 19 am ersten Portal 20.1 durch eine gestrichelte Darstellung, in welcher das vordere Ende des gespreizten Fadenstranges 11 ergriffen wird.

Dieser Zustand ist in Figur 10 dargestellt, von welchem Zustand aus sich der Vorgang des Zuführens, des Ausführens des Ausgleichshubes, des Ablängens und des Ablegens des abgelängten Segmentes gemäß den Figuren 3 bis 9 wiederholt. Der Greifer 19 hat dabei eine Bewegung in Rücklaufrichtung 28 ausgeführt.

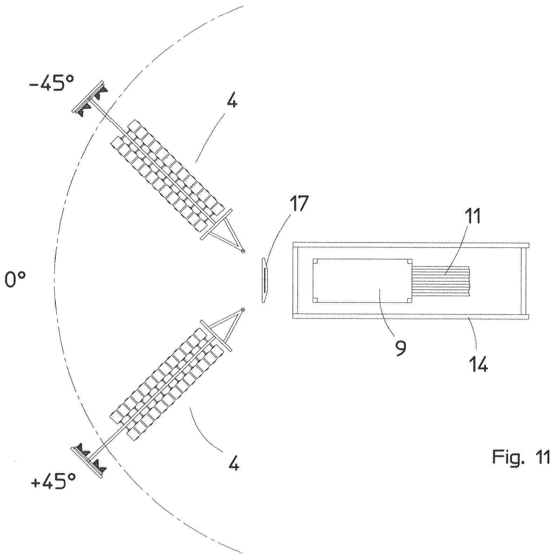

Figur 11 zeigt ein Ausführungsbeispiel, bei welchem eine in einem Rahmen 14 gehaltene bzw. geführte Verlegeeinrichtung 9, von welcher ein gespreizter Fadenstrang 11 zur segmentweisen Verlegung auf der nicht dargestellten Transporteinrichtung 3 einer mit deren Transportketten 22 beidseitig geführten bzw. transportierten Faserlage 1 erzeugbar ist, bzgl. der zu spreizenden Fadenstränge von zwei Spulengattern 4 versorgt wird. Beide Spulengatter 4 sind apparativ abgekoppelt von der Verlegeeinrichtung 9, wobei die von den Spulengattern 4 abgezogenen und zu Fadensträngen 7 zusammengeführten Fäden 6 in einer Ausbreiteinrichtung 17 bereits in eine flache Form gebracht werden, in welcher sie der in der Verlegeeinrichtung 9 nicht dargestellten Spreizeinrichtung 8 zugeführt werden. Auch aus Figur 11 ist ersichtlich, dass beide Spulengatter 4, welche jeweils eine große Anzahl von einzelnen Spulen 5 tragen, vorrichtungsmäßig von der Verlegeeinrichtung 9 insoweit abgekoppelt sind, dass sie keine strukturelle Verbindung zur Verlegeeinrichtung 9 aufweisen. Die einzige Verbindung besteht lediglich darin, dass die von den einzelnen Spulen 5 abgezogenen und zu Fadensträngen 7 verbundenen Fäden 6 vom Spulengatter 4 abgeführt und über die Ausbreiteinrichtung der Verlegeeinrichtung und der in der Verlegeeinrichtung 9 integrierten Spreizeinrichtung 8 zugeführt werden.

Figur 11 belegt, dass durch diese apparative Entkopplung der Spulengatter 4 mit einer hohen Anzahl von Spulen von der eigentlichen Verlegeeinrichtung 9 mit Spreizeinrichtung 8 es ohne Weiteres möglich ist, nicht nur ein Spulengatter 4 mit einer hohen Anzahl von Spulen 5 zu verwenden, ohne dass diese relativ großen Massen dann insgesamt bewegt werden müssten, sondern es ist sogar möglich, zwei oder mehr Spulengatter 4 mit jeweils einer großen Anzahl von Spulen 5 vorzusehen. Dies stellt für die erfindungsgemäßen Einrichtungen gegenüber den im Stand der Technik vorhandenen Einrichtungen, bei welchen die Spulen bei einer segmentweisen Zuführung zu einer Faserlage mitbewegt werden müssen, einen deutlichen Vorteil dar.

Bespielhaft sind zwei Spulengatter 4 gezeigt, welche jeweils in einem Winkel von -45° bzw. +45° angeordnet sind. Angegeben in Figur 11 ist die 0°-Anordnung für ein Spulengatter, welche in fluchtender Richtung zur Verlegeeinrichtung 9 ausgerichtet ist. Wenn ein Spulengatter 4 in 0°-Ausrichtung angeordnet ist, ist die Ausbreiteeinrichtung 17 nicht erforderlich. Wenn jedoch, wie in Figur 11 dargestellt, Spulengatter unter einem Winkel verschieden von der 0°-Ausrichtung angeordnet sind, ist eine Ausbreiteeinrichtung 17 vorgesehen, welche senkrecht verlaufende Stäbe aufweist, so dass durch die unter einem Winkel erfolgende Zuführung der Tows, Rovings, Kabel oder Einzelfäden 6 korrekt ausgerichtet werden können, wobei korrekt Ausrichten das Ausrichten in Bezug auf die Verlegeeinrichtung 9 bedeutet.

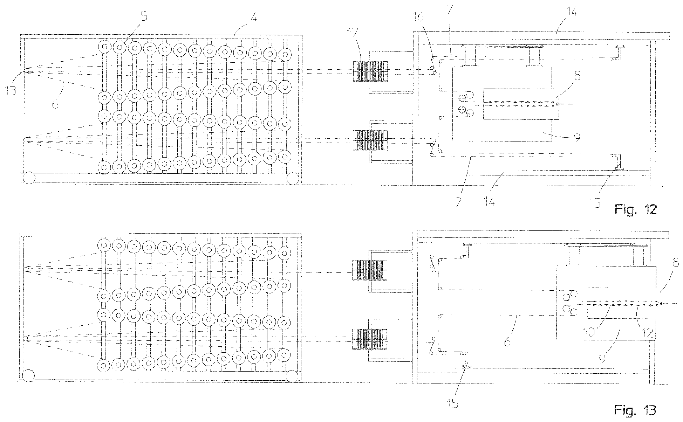

In Figur 12 und Figur 13 sind in prinzipieller Seitenansicht gemäß der von Figur 1 zwei Positionen der Verlegeeinrichtung 9 innerhalb des Rahmens 14 dargestellt. In Figur 12 ist die eigentliche Verlegeeinrichtung 9, welche sozusagen im Huckepack die Spreizeinrichtung 8 trägt, angeordnet. Die eigentliche Verlegeeinrichtung 9 mit der Spreizeinrichtung 8 ist innerhalb des Rahmens 14 als Schlitten geführt, wobei die zugeführten Fadenstränge 7 an einem Halter 15 mit einer Umlenkrolle 16 für den Fadenstrang, welche an einem Gleitelement ebenfalls in der Art eines Schlittens zwischen den beiden Endpositionen innerhalb des Rahmens der Verlegeeinrichtung 9 hin- und herbewegt werden können, umgelenkt werden. Die Ausbreitevorrichtung 17 ist dann erforderlich, wenn das oder die Spulengatter 4 in Schrägstellung angeordnet sind, d. h. von einer 0°-Ausrichtung abweichen (siehe Figur 11).

Dadurch ist es möglich, eine beim diskontinuierlichen Verlegen von Segmenten der gespreizten Fadenstränge 11 sich normalerweise verändernde Fadenspannung durch einen Ausgleichshub auszugleichen, so dass nicht nur eine im Wesentlichen konstante Fadenspannung innerhalb der Verlegeeinrichtung 9 und der Spreizeinrichtung 8 vorhanden ist, sondern dass auch der Spreizprozess kontinuierlich und in gleichbleibend guter Qualität durchgeführt werden kann, und zwar unabhängig davon, in welcher Position sich die eigentliche Verlegeeinrichtung 9 innerhalb des Rahmens 14 befindet. Analog zu Figur 1 sind zwei Spreizebenen 10 innerhalb der Spreizeinrichtung 8 ausgebildet. Zum einen kann dadurch das segmentweise Ablegen dergestalt verbessert werden, dass innerhalb einer Faserlage nicht mehr Segment an Segment verlegt werden muss, sondern dass die einzelnen abzulegenden Segmente sozusagen auf Lücke gelegt werden. Wenn beispielsweise über die obere Ebene die gespreizten Fadenstränge 11 auf Lücke ablegt werden, so können die gespreizten Fadenstränge 7 der unteren Ebene die jeweiligen Lücken ausfüllen. Die übrigen Elemente sind mit gleichen Bezugsziffern versehen. Gemäß dem Ausführungsbeispiel nach Figur 12 ist in Figur 13 die Relativbewegung zwischen der eigentlichen Verlegeeinrichtung 9 mit der Spreizeinrichtung 8 daran und dem Halter 15 mit der Fadenumlenkrolle 16 dargestellt, welcher sich in der linken hinteren Position befindet. Die eigentliche Verlegeeinrichtung 9 befindet sich an der rechten Seite der Vorrichtung. Damit ist die Länge des Segmentes des gespreizten Fadenstranges 7 abnehmbar und ablängbar, welche der Breite der Faserlage entspricht und entsprechend dem abzulegenden Winkel erforderlich ist.

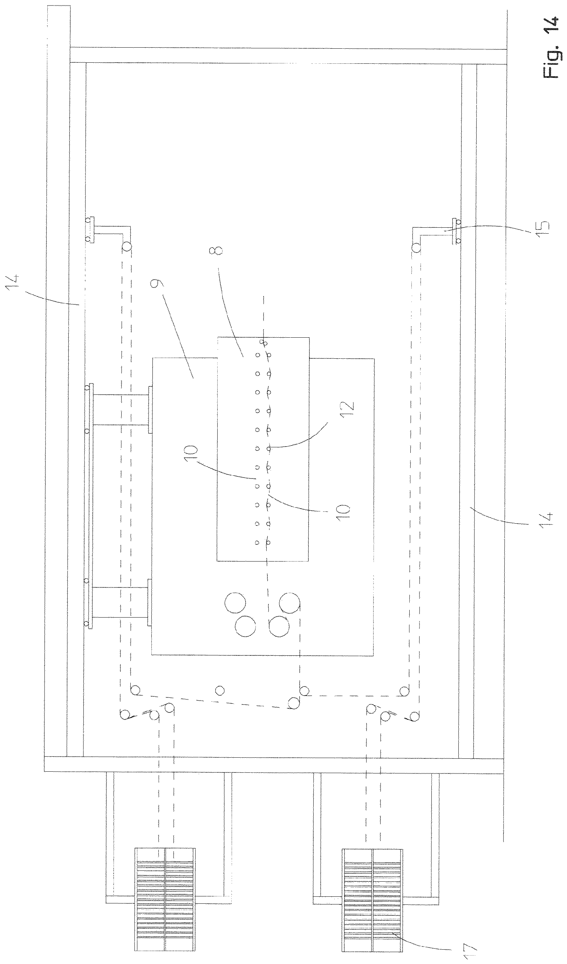

Und schließlich ist in Figur 14 ein weiteres Ausführungsbeispiel dargestellt, bei welchem beispielhaft zwar analog zu den vorherigen Ausführungsbeispielen zwei Spreizebenen in der Spreizeinrichtung 8 an der Verlegeeinrichtung 9 vorhanden sind, jedoch nur eine einzige, in dem Fall gemäß Figur 14 untere, Spreizebene 10 genutzt wird. Dadurch können Stillstandszeiten reduziert werden, wenn nämlich jeweils nur mit einer Ebene gearbeitet wird. Die Ebene, in welcher die Fadenlage gespreizt wird, garantiert einen kontinuierlichen Zuführprozess für zu einer Faserlage 1 zu verlegende Segmente, während die nicht in Spreizung befindlichen Umlenkwalzen bzw. Umlenkrollen der oberen Spreizebene es ermöglichen, dass entsprechend eine Spulenbestückung mit neuen, vollen Spulen möglich ist. Die in Figur 14 eingezeichnete Ausbreiteinrichtung 17 ist nur dann erforderlich, wenn das jeweilige oder die jeweiligen Spulengatter in Schrägstellung zur 0°-Ausrichtung der Zufuhr der Tows, Rovings, Kabel oder Einzelfäden angeordnet ist bzw. sind (siehe Figur 11). Eine besonders effiziente Nutzung des Vorhandenseins von mehreren Spulengattern besteht darin, dass beispielsweise dann, wenn nämlich eine Spulenbestückung aufgebraucht ist, das eine Tow-Ende, Roving-Ende, Kabel-Ende oder Faden-Ende (oben) zur Verbindung mit dem neuen Tow-Anfang, Roving-Anfang oder KabelAnfang (unten und umgekehrt) der neuen Spulenbestückung genutzt wird, um nicht durch das Spreizaggregat neu einfädeln zu müssen.

Für die Umlenkung der Fadenstränge 7 sind am nicht eingezeichneten Gatterausgang und am Eingang der Spreizeinrichtung 8 jeweils senkrechte Stäbe vorgesehen. Die Fadenstränge 7 werden durch die von den Spulen 5 abgezogenen Fäden 6 gebildet und zu eben diesen Fadensträngen 7 zusammengefasst. Sie können bei abweichender Winkelstellung des Spulengatters 4 nicht über die kurze Kante umgelenkt werden. Mögliche sogenannte Dreher, unter denen die Fadenstränge zu verstehen sind, die bei Kreuzspulen den Richtungswechsel am äußeren rechten und linken Rand bilden und im Abwicklungsvorgang dazu neigen zu kippen, können über die lange Zuführstrecke, welche durch den Weg von der Spule 5 zur Umlenkung am Gatterende und bis vor dem Gatterausgang gebildet wird, wieder in die richtige Lage gebracht werden.

### Bezugszeichenliste:

- 1: Faserlage
- 2: Förderrichtung
- 3: Transporteinrichtung
- 4: Spulengatter
- 5: Spulen
- 6: Faden
- 7: Fadenstrang
- 8: Spreizeinrichtung
- 9: Verlegeeinrichtung
- 10: Spreizebenen
- 11: gespreizter Fadenstrang
- 12: Umlenkwalzen / Umlenkstäbe
- 13: Tow- bzw. Kabelumlenkrolle Spulengatter
- 14: Rahmen Verlegeeinrichtung
- 15: Halter Tow- bzw. Kabelumlenkrolle Verlegeeinrichtung
- 16: Umlenkrolle Fadenstrang
- 17: Ausbreiteeinrichtung Fadenstrang
- 18: Halte- und Erfassungseinrichtung
- 19: Greifer 1. Portal
- 20.1: 1. Portal
- 20.2: 2. Portal
- 21: Ablegerichtung gespreiztes Fadensegment / Segmentabzugsrichtung
- 22: Transportketten
- 23: Richtung Ausgleichshub entgegen Segmentabzugsrichtung
- 24: Richtung Ausgleichshub in Segmentabzugsrichtung
- 25: gespreiztes abgelängtes Fadensegment
- 26: Bewegungsrichtung Portal in Förderrichtung
- 27: Bewegungsrichtung Portal entgegen der Förderrichtung
- 28: Rücklaufrichtung Greifer 1. Portal
- 29: Leger 2. Portal

## Patentansprüche

1. Einrichtung zum Aufbringen einer band-, streifen- oder bahnförmigen unidirektionalen Faserlage (1) unter einem definierten Winkel auf eine in Förderrichtung (2) der entstehenden Faserlage (1) dazu sich bewegende Transporteinrichtung (3), bei welcher zumindest ein Spulengatter (4) mit einer Vielzahl von Spulen (5), auf welchen jeweilige Fäden (6) aufgewickelt sind, welche davon abwickelbar und zu einem Fadenstrang (7) zusammenfassbar sind, vorgesehen ist,
**dadurch gekennzeichnet, dass** zumindest eine eine Spreizeinrichtung (8) für den Fadenstrang (7) tragende Verlegeeinrichtung (9) angeordnet ist;
die Verlegeeinrichtung (9) gemeinsam mit der Spreizeinrichtung (8) einen Ausgleichshub zu dem diskontinuierlichen Verbrauch des Fadenstranges (7) durchführt, während welcher die Spreizeinrichtung (8) auch aktiv ist; und
das Spulengatter (4) von der Verlegeeinrichtung (9) separat angeordnet und baulich entkoppelt ist.

2. Einrichtung nach Anspruch 1, **dadurch gekennzeichnet, dass** die Spreizeinrichtung (8) in der Art eines Schlittens auf der Verlegeeinrichtung (9) angeordnet ist, mittels welchem entsprechend dem diskontinuierlichen Verbrauch des Fadenstranges (7) der Ausgleichshub ausführbar ist.

3. Einrichtung nach Anspruch 1 oder 2, **dadurch gekennzeichnet, dass** die Spreizeinrichtung (8) zweiteilig mit zwei Spreizebenen (10) ausgebildet ist, von denen eine Spreizebene eine Zuführung des gespreizten Fadenstranges (11) von oben zur Faserlage (1) und die andere Spreizebene eine Zuführung von unten zur Faserlage (1) erfährt.

4. Einrichtung nach einem der Ansprüche 1 bis 3, **dadurch gekennzeichnet, dass** die Spreizeinrichtung (8) eine Vielzahl von stationär und hintereinander versetzt angeordneten Umlenkwalzen (12) aufweist.

5. Einrichtung nach einem der Ansprüche 1 bis 4, **dadurch gekennzeichnet, dass** die Spreizeinrichtung (8) zwischen einer von der unidirektionalen Faserlage (1) am weitesten entfernten Grundstellung und einer Stellung nach erfolgtem kompletten Ausgleichshub bewegbar ist und die Strecke zwischen der Grundstellung und der Stellung nach dem Ausgleichshub der Breite der unidirektionalen Faserlage (1) entspricht.

6. Einrichtung nach Anspruch 3, **dadurch gekennzeichnet, dass** gegenseitig in der Faserlage (1) sich überlappende gespreizte Fadenstränge (11) einem zusätzlichen Spreizen mittels einer weiteren Spreizeinrichtung oder nochmaligem Durchlaufen der Spreizeinrichtung (8) unterziehbar ist.

7. Einrichtung nach einem der Ansprüche 1 bis 6, **dadurch gekennzeichnet, dass** mehrere Spulengatter (4) und mehrere Verlegeeinrichtungen (9) mit einer jeweiligen Spreizeinrichtung (8) vorgesehen sind, mittels welcher unter definierten Winkeln gespreizte band-, streifen- oder bahnförmige Fadenstränge (11) auf der Transporteinrichtung (3) ablegbar sind, wobei jeder Verlegeeinrichtung (9) mit Spreizeinrichtung (8) jeweils ein von der Verlegeeinrichtung (9) baulich getrenntes Spulengatter (4) zugeordnet ist.

8. Einrichtung nach einem der Ansprüche 1 bis 7, **dadurch gekennzeichnet, dass** die Verlegeeinrichtungen (9) jeweils unter unterschiedlichen Winkeln zu der Förderrichtung der Transporteinrichtung (3) angeordnet sind und den gespreizten Fadenstrang (11) entsprechend ablegen.

9. Einrichtung nach einem der Ansprüche 1 bis 8, **dadurch gekennzeichnet, dass** das Spulengatter (4) bis zu 150 bis 200 Spulen (5) aufweist, insbesondere 100.

10. Verfahren zum Aufbringen einer band-, streifen- oder bahnförmigen unidirektionalen Faserlage (1) auf eine in Förderrichtung (2) sich bewegenden Transporteinrichtung (3) für ein Multiaxialgelege, welches die folgenden Schritte aufweist:
a) jeweilige Fäden (6) werden von einer Vielzahl von stationär angeordneten Spulen (5) eines Spulengatters (4) abgewickelt und zu einem Fadenstrang (7) zusammengefasst,
b) der Fadenstrang (7) wird in einer Spreizeinrichtung (8) gespreizt,
c) der Fadenstrang (7) wird auf der Transporteinrichtung (3) diskontinuierlich abgelegt,
d) die auf einer Verlegeeinrichtung (9) angeordnete Spreizeinrichtung (8) führt relativ zur Verlegeeinrichtung (9) eine Ausgleichsbewegung zum diskontinuierlichen Verbrauch des Fadenstranges (7) bei seinem diskontinuierlichen Verlegen aus, und
e) die Ausgleichsbewegung der Spreizeinrichtung (8) wird relativ zur Verlegeeinrichtung (9) derart ausgeführt, dass der Fadenstrang (7) auch während des Verlegens in seiner Fadenspannung in einem definierten Wertebereich gehalten wird.

11. Verfahren nach Anspruch 10, bei welchem die Spreizeinrichtung (8) auf der Verlegeeinrichtung (9) beim Ausführen ihrer Ausgleichsbewegung schlittenartig gleitet.

12. Verfahren nach Anspruch 10 oder 11, bei welchem der Fadenstrang (7) in einem System hintereinander versetzt angeordneter Umlenkwalzen (12) gespreizt wird.

13. Verfahren nach einem der Ansprüche 10 bis 12, bei welchem jedes Spulengatter (4) einer Mehrzahl von Spulengattern jeweils eine Verlegeeinrichtung (9) einer der Anzahl der Spulengatter entsprechenden Anzahl von Verlegeeinrichtungen mit den jeweiligen Fäden (6) beliefert.

14. Verfahren nach einem der Ansprüche 10 bis 13, bei welchem die jeweilige Verlegeeinrichtung (9) die Fadenstränge (7) unter einem definierten Winkel auf der Transporteinrichtung (3) ablegt.

15. Verfahren nach einem der Ansprüche 10 bis 14, bei welchem eine zuvor gespreizte Fadenlage (7) oder ein zum Teil bereits gespreizter neuer Fadenstrang (11) einem zusätzlichen Spreizprozess unterzogen wird.

16. Verfahren nach einem der Ansprüche 10 bis 15, bei welchem das Spreizen der Fadenstränge (7) in einer Ebene durchgeführt wird, zu welcher ein Teil der Fadenstränge (7) von oben und ein Teil der Fadenstränge (7) von unten durch Umlenkung derselben in die Ebene der Faserlage (1) zugeführt werden.

## Claims

1. Installation for placing at a defined angle a tape-shaped, strip-shaped, or web-shaped unidirectional fibrous tier (1) on a transport installation (3) which in the conveying direction (2) of the fibrous tier (1) being created moves in relation to the latter, wherein at least one creel (4) having a multiplicity of packages (5) on which respective threads (6) are wound is provided, said threads (6) being able to be unwound from said package (5) and be gathered so as to form a thread strand (7),
**characterized in that** at least one laying installation (9) which supports a spreading installation (8) for the thread strand (7) is disposed;
the laying installation (9), conjointly with the spreading installation (8), for discontinuously consuming the thread strand (7) carries out a compensation stroke during which the spreading installation (8) is also active; and
the creel (4) is disposed separately from the laying installation (9) and in terms of construction is decoupled from the latter

2. Installation according to Claim 1, **characterized in that** the spreading installation (8) in the manner of a slide is disposed on the laying installation (9), the compensation stroke by means of said slide being able to be carried out so as to correspond to the discontinuous consumption of the thread strand (7).

3. Installation according to Claim 1 or 2, **characterized in that** the spreading installation (8) is configured in two parts, having two spreading planes (10) of which one spreading plane is imparted a supply of the spread thread strand (11) from above to the fibrous tier (1), and the other spreading plane is imparted a supply from below to the fibrous tier (1).

4. Installation according to one of Claims 1 to 3, **characterized in that** the spreading installation (8) has a multiplicity of deflection rollers (12) which are disposed so as to be stationary and offset behind one another.

5. Installation according to one of Claims 1 to 4, **characterized in that** the spreading installation (8) is able to be moved from an initial position which is the most distal from the unidirectional fibrous tier (1) and a position upon performing a complete compensation stroke, and the distance between the initial position and the position after the compensation stroke corresponds to the width of the unidirectional fibrous tier (1).

6. Installation according to Claim 3, **characterized in that** spread thread strands (11) which mutually overlap in the fibrous tier (1) are able to be subjected to additional spreading by means of a further spreading installation or to passing through the spreading installation (8) once more.

7. Installation according to one of Claims 1 to 6, **characterized in that** a plurality of creels (4) and a plurality of laying installations (9) having a respective spreading installation (8) are provided, by means of which laying installations (9) tape-shaped, strip-shaped, or web-shaped thread strands (11) are able to be deposited at a defined angle on the transport installation (3), wherein each laying installation (9) having a spreading installation (8) is in each case assigned one creel (4) which in terms of construction is separate from the laying installation (9).

8. Installation according to one of Claims 1 to 7, **characterized in that** the laying installations (9) are in each case disposed at dissimilar angles in relation to the conveying direction of the transport installation (3) and correspondingly deposit the spread thread strand (11).

9. Installation according to one of Claims 1 to 8, **characterized in that** the creel (4) has up to 150 to 200, in particular 100, packages (5).

10. Method for placing a tape-shaped, strip-shaped, or web-shaped unidirectional fibrous tier (1) on a transport installation (3) which moves in a conveying direction (2) for a multiaxial scrim, said method comprising the following steps:
a) respective threads (6) are unwound from a multiplicity of packages (5) of a creel (4), said packages (5) being disposed so as to be stationary on said creel (4), and gathered so as to form a thread strand (7);
b) the thread strand (7) is spread in a spreading installation (8);
c) the thread strand (7) is discontinuously deposited on the transport installation (3);
d) the spreading installation (8) which is disposed on a laying installation (9) for the discontinuous consumption of the thread strand (7) in the discontinuous laying of the latter carries out a compensation movement relative to the laying installation (9); and
e) the compensation movement of the spreading installation (8) relative to the laying installation (9) is carried out in such a manner that the thread strand (7) in terms of the thread tension of the latter is kept in a defined range of values even while being laid.

11. Method according to Claim 10, wherein the spreading installation (8) when carrying out the compensation movement thereof slides in the manner of a slide on the laying installation (9).

12. Method according to Claim 10 or 11, wherein the thread strand (7) is spread in a system of deflection rollers (12) which are disposed so as to be offset behind one another.

13. Method according to one of Claims 10 to 12, wherein each creel (4) of a plurality of creels supplies in each case one laying installation (9) of a number of laying installations with the respective threads (6), said number of laying installations corresponding to the number of creels.

14. Method according to one of Claims 10 to 13, wherein the respective laying installation (9) deposits the thread strands (7) at a defined angle on the transport installation (3).

15. Method according to one of Claims 10 to 14, wherein a previously spread thread tier (7), or new thread strand (11) that has already been partially spread, is subjected to an additional spreading process.

16. Method according to one of Claims 10 to 15, wherein the spreading of the thread strands (7) is carried out in a plane to which part of the thread strands (7) are supplied from above and part of the thread strands (7) are supplied from below by deflecting said threads into the plane of the fibrous tier (1).

## Revendications

1. Dispositif d'application d'une couche fibreuse (1) unidirectionnelle en forme de bande, de ruban ou de feuille continue suivant un angle défini sur un dispositif de transport (3) se déplaçant en outre dans le sens de convoyage (2) de la couche fibreuse produite (1), dans lequel il est prévu au moins un cantre (4) doté d'une pluralité de bobines (5), sur lesquelles sont enroulés des fils respectifs (6), lesquels peuvent être déroulés de celles-ci et peuvent être réunis en un faisceau de fils (7), **caractérisé en ce qu'**au moins un dispositif de pose (9) supportant un dispositif d'écartement (8) pour le faisceau de fils (7) est prévu ;
le dispositif de pose (9) effectue, conjointement avec le dispositif d'écartement (8), une course de compensation pour la consommation discontinue du faisceau de fils (7), course pendant laquelle le dispositif d'écartement (8) est également actif ; et le cantre (4) est disposé séparément du dispositif de pose (9) et est désaccouplé structuralement de celui-ci.

2. Dispositif selon la revendication 1, **caractérisé en ce que** le dispositif d'écartement (8) est disposé à la manière d'un chariot sur le dispositif de pose (9), chariot moyen duquel la course de compensation peut être effectuée de manière correspondante à la consommation discontinue du faisceau de fils (7).

3. Dispositif selon la revendication 1 ou 2, **caractérisé en ce que** le dispositif d'écartement (8) est réalisé en deux parties avec deux plans d'écartement (10), parmi lesquels un plan d'écartement subit une amenée du faisceau de fils écarté (11) par le haut par rapport à la couche fibreuse (1) et l'autre plan d'écartement subit une amenée par le bas par rapport à la couche fibreuse (1).

4. Dispositif selon l'une des revendications 1 à 3, **caractérisé en ce que** le dispositif d'écartement (8) comprend une pluralité de rouleaux de déviation (12) disposés de manière fixe et de manière décalée les uns derrière les autres.

5. Dispositif selon l'une des revendications 1 à 4, **caractérisé en ce que** le dispositif d'écartement (8) est mobile entre une position de base la plus éloignée de la couche fibreuse unidirectionnelle (1) et une position après la course de compensation complète effectuée et la distance entre la position de base et la position après la course de compensation correspondant à la largeur de la couche fibreuse unidirectionnelle (1).

6. Dispositif selon la revendication 3, **caractérisé en ce que** des faisceaux de fils écartés (11) se chevauchant réciproquement dans la couche fibreuse (1) peuvent être soumis à un écartement supplémentaire au moyen d'un autre dispositif d'écartement ou par traversée à nouveau du dispositif d'écartement (8).

7. Dispositif selon l'une des revendications 1 à 6, **caractérisé en ce que** plusieurs cantres (4) et plusieurs dispositifs de pose (9) sont dotés d'un dispositif d'écartement respectif (8) au moyen duquel des faisceaux de fils écartés (11) en forme de bandes, de rubans ou de feuilles continues peuvent être posés sur le dispositif de transport (3) suivant un angle défini, un cantre (4) séparé structuralement du dispositif de pose (9) étant associé respectivement à chaque dispositif de pose (9) doté d'un dispositif d'écartement (8).

8. Dispositif selon l'une des revendications 1 à 7, **caractérisé en ce que** les dispositifs de pose (9) sont disposés respectivement suivant différents angles par rapport au sens de convoyage du dispositif de transport (3) et déposent de manière correspondante le faisceau de fils écarté (11).

9. Dispositif selon l'une des revendications 1 à 8, **caractérisé en ce que** le cantre (4) comprend jusqu'à 150 à 200 bobines (5), en particulier 100.

10. Procédé d'application d'une couche fibreuse (1) unidirectionnelle en forme de bande, de ruban ou de feuille continue sur un dispositif de transport (3) se déplaçant dans le sens de convoyage (2) pour une nappe multiaxiale, lequel comprend les étapes suivantes :
a) des fils respectifs (6) sont déroulés d'une pluralité de bobines (5), disposées de manière fixe, d'un cantre (4) et sont réunis en un faisceau de fils (7),
b) le faisceau de fils (7) est écarté dans un dispositif d'écartement (8),
c) le faisceau de fils (7) est posé de manière discontinue sur le dispositif de transport (3),
d) le dispositif d'écartement (8) disposé sur un dispositif de pose (9) effectue par rapport au dispositif de pose (9) un déplacement de compensation pour la consommation discontinue du faisceau de fils (7) lors de sa pose discontinue, et
e) le déplacement de compensation du dispositif d'écartement (8) est effectué par rapport au dispositif de pose (9) de telle sorte que la tension de fil du faisceau de fils (7) est, même pendant la pose, maintenue dans une plage de valeurs définie.

11. Procédé selon la revendication 10, dans lequel le dispositif d'écartement (8) glisse sur le dispositif de pose (9) à la manière d'un chariot lors de la réalisation de son déplacement de compensation.

12. Procédé selon la revendication 10 ou 11, dans lequel le faisceau de fils (7) est écarté dans un système de rouleaux de déviation (12) disposés de manière décalée les uns derrière les autres.

13. Procédé selon l'une des revendications 10 à 12, dans lequel chaque cantre (4) d'une pluralité de cantres approvisionne en fils respectifs (6) respectivement un dispositif de pose (9) d'un nombre de dispositifs de pose correspondant au nombre de cantres.

14. Procédé selon l'une des revendications 10 à 13, dans lequel le dispositif de pose respectif (9) dépose les faisceaux de fils (7) suivant un angle défini sur le dispositif de transport (3).

15. Procédé selon l'une des revendications 10 à 14, dans lequel une couche de fils (7) préalablement écartée ou un nouveau faisceau de fils (11) déjà écarté partiellement est soumis(e) à un processus d'écartement supplémentaire.

16. Procédé selon l'une des revendications 10 à 15, dans lequel l'écartement des faisceaux de fils (7) est effectué dans un plan auquel sont acheminées une partie des faisceaux de fils (7) par le haut et une partie des faisceaux de fils (7) par le bas par déviation de ceux-ci dans le plan de la couche fibreuse (1).
